(19) **Europäisches Patentamt / European Patent Office / Office européen des brevets**

(11) **EP 3 761 319 A1**

(12) **EUROPEAN PATENT APPLICATION**
published in accordance with Art. 153(4) EPC

(43) Date of publication:
06.01.2021 Bulletin 2021/01

(21) Application number: 19760960.5

(22) Date of filing: 27.02.2019

(51) Int Cl.:
*G21B 3/00* (2006.01)     *G21F 9/00* (2006.01)

(86) International application number:
PCT/JP2019/007564

(87) International publication number:
WO 2019/168030 (06.09.2019 Gazette 2019/36)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 27.02.2018 JP 2018032924

(71) Applicant: Chubu University Educational Foundation
Kasugai-shi
Aichi 487-8501 (JP)

(72) Inventors:
• SATO Motoyasu
Kasugai-shi, Aichi 487-8501 (JP)

• IIYOSHI Atsuo
Kasugai-shi, Aichi 487-8501 (JP)
• KINO Yasushi
Sendai-shi, Miyagi 980-8577 (JP)
• MUTOH Takashi
Kasugai-shi, Aichi 487-8501 (JP)
• TANAHASHI Yoshiharu
Kasugai-shi, Aichi 487-8501 (JP)
• YAMAMOTO Norimasa
Kasugai-shi, Aichi 487-8501 (JP)
• TAKANO Hirohisa
Kasugai-shi, Aichi 487-8501 (JP)
• HASEGAWA Yukihiko
Kasugai-shi, Aichi 487-8501 (JP)

(74) Representative: Mewburn Ellis LLP
Aurora Building
Counterslip
Bristol BS1 6BX (GB)

(54) **NUCLEAR FUSION SYSTEM, NUCLEAR FUSION METHOD, NUCLIDE TRANSMUTATION LIFE-SHORTENING TREATMENT SYSTEM FOR LONG LIVED FISSION PRODUCT, AND NUCLIDE TRANSMUTATION LIFE-SHORTENING TREATMENT METHOD FOR LONG LIVED FISSION PRODUCT**

(57) [Problem] To achieve flight-state negative muon nuclear fusion, and to provide a nuclear fusion system and a nuclear fusion method for eliminating major restrictions on devices required for holding and cooling a target, for example, and to provide a nuclide transmutation life-shortening treatment system and a nuclide transmutation life-shortening treatment method capable of irradiating a long lived fission product with neutrons generated by the nuclear fusion system and the nuclear fusion method to effect nuclide transmutation.

[Solution] A nuclear fusion system S is provided with a muon generating means 1 for generating muons, a gas supply means 2 for circulating and supplying a feed gas, a de Laval nozzle 3 which accelerates the feed gas to a supersonic speed, and a shock wave generator 4, wherein the feed gas accelerated to a supersonic speed by the de Laval nozzle 3 is caused to collide with the shock wave generator 4 to generate oblique shock waves, the oblique shock waves are caused to converge on the central axis of the de Laval nozzle 3 to hold a high-density gas target in space, and muons generated by the muon generating means 1 are introduced into the high-density gas target to cause a nuclear fusion reaction to occur.

FIG. 1

**Description**

BACKGROUND OF THE INVENTION

FIELD OF THE INVENTION

The present invention relates to a nuclear fusion system, a nuclear fusion method, a nuclide transmutation life-reduction treatment system for a long-lived fission product and a nuclide transmutation life-reduction treatment method for a long-lived fission product, through the use of muon-catalyzed fusion.

DESCRIPTION OF THE BACKGROUND ART

Conventionally, as a nuclear fusion system, magnetic fusion to be caused by confining magnetically a high temperature plasma has been studied (e.g., Non-Patent Document 1).

As a nuclear fusion system of another scheme, there has been proposed a method through the use of muon-catalyzed fusion.

In the muon-catalyzed fusion, a muon ($\mu^-$) having a mass 207 times heavier than that of an electron and having a negative charge is used. When deuterium or deuterium mixed with tritium is irradiated with a negative muon, such a negative muon causes nuclei to attract each other so as to form a muonic molecule. The negative muon has the same charge as that of the electron, but has a mass approximately 200 times heavier than that of the electron, and therefore, an orbital radius of the muon in a bound state is approximately 1/200 of that of the electron. As a result, assuming that the electron is replaced with the negative muon, it would be easier for the nuclei to approach each other, and therefore, nuclear fusion therebetween would be likely to occur. The negative muon could be involved in such a nuclear reaction many times until it annihilates, which is the action of negative muon like a catalyst.

A muon-catalyzed fusion reactor has been proposed in, e.g., Patent Document 1, and a method through the use of muon-catalyzed fusion for a neutron source has been proposed in, e.g., Patent Document 2.

On the other hand, as a method of treating high level radioactive wastes, study of glassifying such wastes and thereafter disposing the glassified wastes in strata has been made; however, there remain problems such as difficulties in gaining the understanding with respect to strata of disposal sites to be selected. Further, an ethical issue has also been conventionally pointed out for leaving, beyond an archaeological age, some substances whose half-lives are longer than any lives of species emerged in an era from birth of ape-men to modern men, or other substances such as LLFPs (Long-Lived Fission Products) whose half-lives are, e.g., millions of years.

Hence, a technology of performing nuclide transmutation of an LLFP so as to reduce its half-life or to transmute an LLFP into a stable isotope has been studied.

The nuclide transmutation of an LLFP is performed by irradiating the LLFP with high-intensity neutrons. The source for such high-intensity neutrons could be obtained by a controlled-thermonuclear fusion reaction through the use of plasma, a transuranium element fission reaction, and the like.

However, in order to obtain a necessary number of neutrons (e.g., $10^{17}$ particles/s or more) for the LLFP treatment by the controlled-thermonuclear fusion reaction through the use of plasma, a facility having at least a scale as large as International Thermonuclear Experimental Reactor (ITER) has been needed, and further in order to reduce the treatment time, a modification made to the facility so as to achieve a higher density of neutron flux has been further needed.

(Prior Art Documents)

(Non-Patent Documents)

Non-Patent Document 1: "Introduction to Nuclear Fusion - High Temperature Plasma Confinement -" authored by Shoichi Yoshikawa and Atsuo Iiyoshi (1972), published by Kyoritsu Shuppan Co., Ltd.

(Patent Documents)

Patent Document 1: Japanese Patent Application Laid-Open Publication No. 2016-114370
Patent Document 2: Japanese Patent Application Laid-Open Publication No. H07-239397

(Problems to be solved)

In conventional magnetic fusion through the use of thermal equilibrium fully ionized ultra-high temperature plasma, a nuclear reaction cross section is as small as 1 to 5 barns. When a system of nuclear reaction unlikely to occur is used in such a manner, a relative kinetic energy of deuterium-tritium as high as 30-100 KeV is needed. Hence, in order to generate a high temperature plasma floating while being confined in vacuum for one second or more, a magnetic-field generation facility having a huge scale, vacuum chamber, and the like have been needed. Further, a high energy discharged in fusion reaction is to be effectively acquired while the relevant device being cooled. In magnetic fusion, a facility has needed to be upsized while a particular cooling method of molten salt and the like being needed.

In the muon-catalyzed fusion disclosed in Patent Documents 1, 2 or the like, a method through the use of deuterium (represented as a symbol "d" or "D") and tritium (represented as a symbol "t" or "T") in a cryogenic solid or liquid phase was proposed as a target to be irradiated with muons, and the basic experiments have been performed by such a method. A method through the use of a muon target in a gas phase having a high pressure mixture gas sealed, at approximately 150 atm, in a cylindrical chamber has also been proposed. In these methods, muon particles having a high energy density are introduced into a high density target having a small volume, and thereby a pair of D/T is caused to undergo a DT fusion reaction within the target, which results in initiating disadvantageously evaporation or rapid expansion of the target within a very short period of time. It has been extremely difficult to remove heat from a cryogenic state, and for this reason, the muon target in such a state has hardly served as any practical energy sources. Further, the muon target having gas confined therein at a high pressure has imposed severe restrictions disadvantageously on the relevant device.

The inventors of the present invention have made the following consideration on a muon nuclear reaction.

In the muon nuclear reaction, a solution has been obtained, on the basis of the established wave function below, for dynamics of a reaction occurring when a pair of nuclei approach each other to such an extent that a distance therebetween reaches substantially a radius of a muonic atom.

$$\psi_{JM} = \phi_{1s}^{d\mu}(r_1)\chi_{1s}^{d\mu+t}(R_1) + \phi_{1s}^{t\mu}(r_2)\chi_{1s}^{t\mu+d}(R_2) + \psi_{JM}^{(closed)}$$

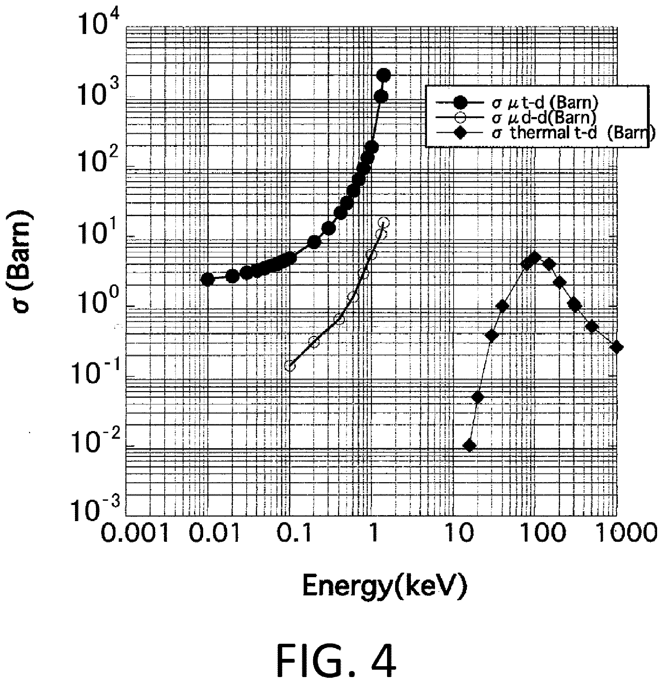

The third term of a right-side expanded functions corresponds to "recombination to non-adiabatic + nuclear reaction channel" of a muonic molecule. The equation of dynamics has been solved by applying a Gaussian function expansion method to the above function, and the results obtained by the solutions are shown in FIG. 4.

FIG. 4 shows a relation between: a nuclear-fusion reaction cross section represented by a coefficient proportional to the occurrence probability of a nuclear fusion reaction; and a kinetic energy, which is correlated with a relative velocity, of nuclei undergoing a nuclear fusion reaction. The vertical axis represents the nuclear-fusion reaction cross section, and the horizontal axis represents the kinetic energy.

At present, in magnetic fusion as a mainstream of research and development, a nuclear fusion reaction (thermal t - d) between naked nuclei $d^+$ and $t^+$ is used. Each of the two lines on the left side of FIG. 4 indicates a possible nuclear-fusion reaction cross section assuming that an electron orbiting around a nucleus is replaced with another lepton (elementary particle) called a negative muon having a mass 207 times heavier than that of the electron.

In deuterium and muonic tritium ($t\mu$ - d), at a temperature corresponding to 1.4 keV with a density having $10^{21}$ $cm^{-3}$, a nuclear fusion reaction occurs between a muonic tritium atom ($t\mu$) and a deuterium ion (d), and its reaction cross section is 2000 barns (1 barn is $10^{-24}$ $cm^2$) which is two orders of magnitude larger than 50 barns at 100 KeV in normal nuclear fusion between deuterium-tritium nuclei d and t. The nuclear-fusion reaction cross section in this reaction is larger than a cross section of nuclear fusion reaction caused by the collision between $d\mu$ and d.

The atomic radius of a muonic atom in a ground state is reduced to approximately 1/200 of that of a normal atom. When the muonic tritium atoms and the deuterium ions (naked nuclei) as described above fly around (In-Flight) to approach each other, a resonance state appears in the wave function, and therefore a nuclear-fusion reaction rate increases. Such a nuclear fusion reaction is positioned in a new reaction field located intermediately between: low temperature nuclear fusion generated through resonance state occurring in a muonic molecule created by muons introduced into extremely low temperature solid/liquid-phase hydrogen with significantly low atomic momentum; and high temperature plasma-state nuclear fusion generated by high-velocity ions flying around to collide with each other. This uniquely developed fusion reaction is called in-flight negative muon catalyzed nuclear fusion (In-Flight Muon Catalyzed Fusion: IFMCF).

## SUMMARY OF THE INVENTION

(Means for Solving Problems)

One of the objectives of the present invention is to provide a nuclear fusion system and a nuclear fusion method capable of realizing in-flight negative muon catalyzed nuclear fusion released from any severe restrictions on a device necessary for retaining and cooling a target.

Another of the objectives of the present invention is to provide a nuclide transmutation life-reduction treatment system for a long-lived fission product (LLFP) and a nuclide transmutation life-reduction treatment method for a long-lived fission product (LLFP) capable of efficiently irradiating the LLFP with neutrons generated through the use of the nuclear fusion system and the nuclear fusion method, respectively, so that the LLFP undergoes nuclide transmutation.

In order to achieve the above objective, in a first aspect of the present invention, there is used, as technical means, a nuclear fusion system comprising: a muon generation unit configured to generate negative muons; a gas supply unit configured to circulate and supply gaseous deuterium or gaseous deuterium-tritium mixture as raw material gas for a nuclear fusion reaction; and a Laval nozzle configured to accelerate the raw material gas supplied from the gas supply unit to such an extent that the raw material gas travels at supersonic velocity, wherein the Laval nozzle includes a flow regulation portion connected to the gas supply unit, the flow regulation portion configured such that the generated negative muons are decelerated therein, and a reaction portion arranged at a downstream side of the flow regulation portion, the reaction portion configured such that the nuclear fusion reaction occurs therein, the reaction portion having arranged thereinside a shock wave generator configured to undergo collision with the raw material gas accelerated to supersonic velocity so as to generate an oblique shock wave, wherein the raw material gas supplied from the gas supply unit into the Laval nozzle is accelerated by the Laval nozzle to supersonic velocity so as to collide with the shock wave generator, wherein the oblique shock wave is generated as a result of collision with the shock wave generator, and is caused to converge on a center axis of the Laval nozzle, and thereby a high-density gas target is retained in a gas phase, and wherein the negative muons generated from the muon generation unit are introduced into the retained high-density gas target, and thereby the nuclear fusion reaction is caused to occur.

In a second aspect of the present invention, there is used, as technical means, the nuclear fusion system in the first aspect of the present invention further comprising: a fusion ignition unit configured to input an initial energy for starting the nuclear fusion reaction into the high-density gas target.

In a third aspect of the present invention, there is used, as technical means, a nuclide transmutation life-reduction treatment system for a long-lived fission product, through the use of the nuclear fusion system in the first or second aspect of the present invention, the nuclide transmutation life-reduction treatment system comprising: a long-lived fission product treatment unit configured such that the long-lived fission product is arranged so as to surround the high-density gas target, wherein neutrons generated as a result of occurrence of the nuclear fusion reaction in the high-density gas target are introduced into the long-lived fission product, so that the long-lived fission product undergoes nuclide transmutation, thereby to have a half-life reduced.

In a fourth aspect of the present invention, there is used, as technical means, a nuclear fusion method comprising the steps of: providing a Laval nozzle and a shock wave generator arranged inside the Laval nozzle for generating an oblique shock wave; accelerating gaseous deuterium or gaseous deuterium-tritium mixture, as raw material gas for a nuclear fusion reaction, to such an extent that the raw material gas travels at supersonic velocity; generating the oblique shock wave as a result of collision of the accelerated raw material gas and the shock wave generator, and causing the generated oblique shock wave to converge on a center axis of the Laval nozzle, thereby to retain a high-density gas target in a gas phase; and introducing negative muons into the high-density gas target, thereby to generate the nuclear fusion reaction.

In a fifth aspect of the present invention, there is used, as technical means, a nuclide transmutation life-reduction treatment method for a long-lived fission product comprising the steps of: introducing neutrons generated by the nuclear fusion method in the fourth aspect of the present invention into a long-lived fission product arranged so as to surround a reaction region for nuclear fusion, so that the long-lived fission product undergoes nuclide transmutation, thereby to have a half-life reduced.

(Advantageous Effects of the Invention)

According to the first aspect of the present invention, the high-density gas target could be retained, by the shock wave generated in a supersonic flow, in a gas phase as a nuclear fusion region, and the configuration of such a gas target could be cooled by a high-velocity flow. In such a manner, it is possible to relax engineering restrictions such as cooling imposed on a device, and to steadily and stably maintain the high-density gas target as the nuclear fusion region without the use of any large-scaled and complicated devices, thereby capable of realizing the in-flight negative muon catalyzed nuclear fusion.

According to the second aspect of the present invention, an initial energy for starting the nuclear fusion reaction could be inputted by the fusion ignition unit into the high-density gas target.

According to the third aspect of the present invention, the long-lived fission product (LLFP) could be so irradiated efficiently with neutrons generated as a result of muon-catalyzed fusion as to undergo nuclide transmutation, and thereby its half-life could be reduced.

According to the fourth aspect of the present invention, the high-density gas target could be retained, by the shock wave generated in a supersonic flow, in a gas phase as a nuclear fusion region, and the configuration of such a gas target could be cooled by a high-velocity flow. In such a manner, it is possible to relax engineering restrictions such as cooling imposed on a device, and to steadily and stably maintain the high-density gas target as the nuclear fusion region without the use of any large-scaled and complicated devices, and thereby the nuclear fusion reaction could be caused to occur.

According to the fifth aspect of the present invention, the long-lived fission product (LLFP) could be so irradiated efficiently with neutrons generated as a result of muon-catalyzed fusion as to undergo nuclide transmutation, and thereby its half-life could be reduced.

BRIEF DESCRIPTIONS OF THE DRAWINGS

FIG. 1 depicts a schematic view showing a configuration of a nuclear fusion system and a nuclide transmutation life-reduction treatment system for a long-lived fission product, where (A) is a perspective view showing schematically a main system configuration, and (B) is a plan view showing schematically a system configuration including auxiliary facilities and the like.

FIG. 2 depicts an explanatory view illustrating schematically a method of retaining a gas target.
FIG. 3 depicts an explanatory view for explanation of the effect of reducing an effective half-life of an LLFP.
FIG. 4 depicts an explanatory view for explanation of a relation between: a nuclear-fusion reaction cross section as a coefficient proportional to the occurrence probability of a nuclear fusion reaction; and a kinetic energy of nuclei undergoing a nuclear fusion reaction.

DESCRIPTIONS OF EMBODIMENTS OF THE INVENTION

[CONFIGURATION OF NUCLEAR FUSION SYSTEM]

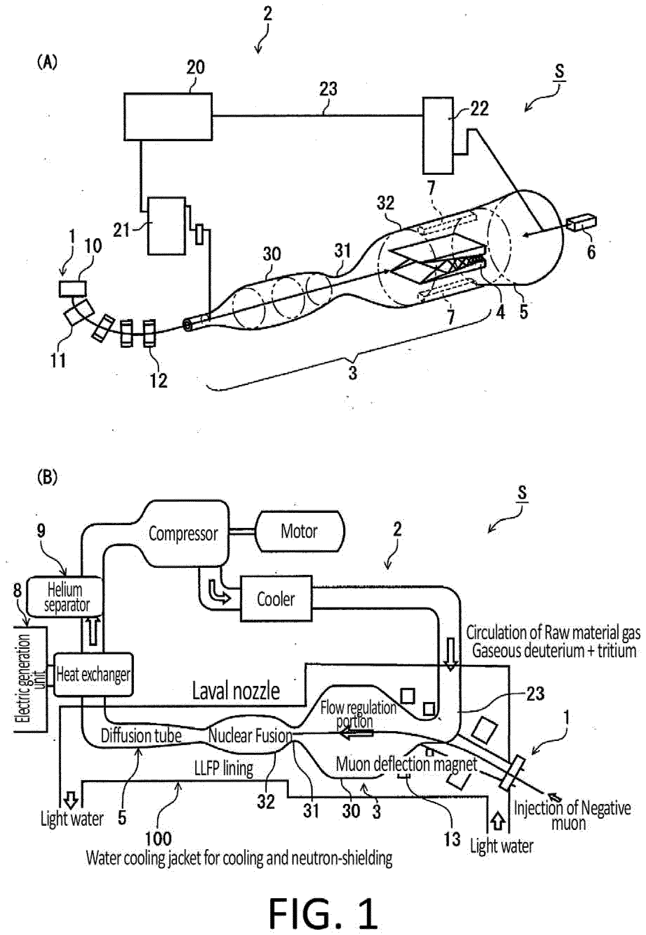

A nuclear fusion system (S) according to the present invention will be described with reference to FIG. 1.

As shown in (A) of FIG. 1, the nuclear fusion system (S) includes: a muon production unit 1; a gas supply unit 2; a Laval nozzle 3; a shock wave generator 4; a diffusion tube 5; and a fusion ignition unit 6.

The muon production unit 1 is configured to generate muons necessary for a muon-catalyzed fusion reaction so as to introduce such generated muons into the Laval nozzle 3.

More specifically, the muon production unit 1 includes: a proton accelerator 10; a muon generation part 11 having a target such as beryllium (Be) to generate muons by irradiating the target with accelerated protons to generate pions and then allowing generated pions to naturally decay; and a muon introduction part 12. For the proton accelerator 10, an accelerator having a known configuration could be applied.

A muon beam created by the proton accelerator 10 and the muon generation part 11 is caused to pass through the muon introduction part 12 and enter into an entrance of a flow regulation portion 30 of the Laval nozzle 3, thereby being introduced into an interior of the flow regulation portion 30 of the Laval nozzle 3.

The gas supply unit 2 is configured to circulate and supply gaseous deuterium (deuterium gas) or gaseous deuterium mixed with gaseous tritium (deuterium-tritium mixture gas), which is raw material gas serving as a muon's target for fusion reaction, and a known configuration for circulating and supplying gas could be adopted for the gas supply unit 2. In an embodiment according to the present invention, the gas supply unit 2 includes a compressor 20, an accumulator tank 21, a dump tank 22, a pipe 23, and the like.

The Laval nozzle 3 is configured to accelerate raw material gas supplied from the gas supply unit 2 to such an extent that accelerated raw material gas travels at supersonic velocity. The Laval nozzle 3 includes: a flow regulation portion 30 in a tubular shape connected, at an upstream side, to the gas supply unit 2, through which raw material gas is allowed to pass at subsonic velocity; a throat portion 31 reduced in diameter from the flow regulation portion 30; and a reaction portion 32 in a tubular shape connected to the throat portion 31 and expanded in diameter from the throat portion 31, through which raw material gas is allowed to pass at supersonic velocity and in which a nuclear fusion reaction is caused to occur.

The shock wave generator 4, which is arranged inside the reaction portion 32 of the Laval nozzle 3, is configured to undergo collision with raw material gas accelerated to supersonic velocity so as to generate an oblique shock wave.

The shock wave generator 4 is arranged oppositely with respect to supersonic flow, and generates an oblique shock wave by collision with the supersonic flow and causes the generated oblique shock wave to converge on a center axis of the Laval nozzle 3 so as to retain a resultant high-density gas target in a gas phase.

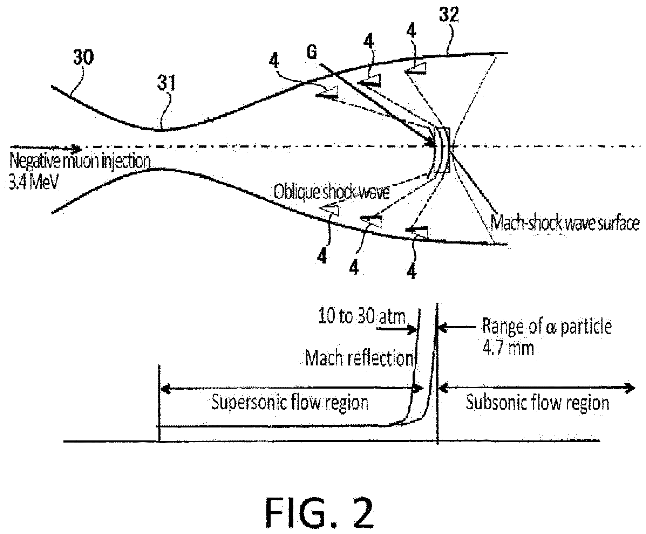

The shock wave generator 4 may suffice if it is so formed as to be aerodynamically balanced with a dynamic pressure of flow at an upstream side, an oblique shock wave, Mach shock wave, and reflective wave, and more specifically, the shock wave generator 4 could be formed as, *e.g.,* a pair of plate-shaped members as shown in FIG. 1 having surfaces inclined toward a downstream side to face each other, or a plurality of small protrusions as shown in FIG. 2 arranged circumferentially.

The diffusion tube 5 is a member in a tubular shape arranged on a downstream sided portion of the Laval nozzle 3, and configured to decelerate velocity of raw material gas travelling therethrough from a supersonic level to subsonic level.

The fusion ignition unit 6 is configured to input an initial energy for starting a nuclear fusion reaction, and more specifically, e.g., an excimer laser, a nanosecond puled laser, or a plasma gun could be applied. An $\alpha$-ray source of approximately 3.5 MeV could also be applied. Here, due to the fact that a high-density gas target may be prevented from being stably formed when laser or the like is introduced from an upstream side, it is preferred that the fusion ignition unit 6 be arranged with respect to the Laval nozzle 3 at a downstream side.

The nuclear fusion system (S) may further include auxiliary facilities and the like, and for such a system, a configuration as shown in (B) of FIG. 1 could be adopted. It is to be noted that, in (B) of FIG. 1, the shock wave generator 4, the fusion ignition unit 6, and a long-lived fission product treatment unit 7 are not shown.

The muon production unit 1 includes a muon deflection magnet 13 by which muons are so deflected as to enter obliquely with respect to a center axis of the Laval nozzle 3. The pipe 23 connected to the flow regulation unit 30 is arranged so as to be bent in a "L" shape in order to shield neutrons leaking from the Laval nozzle 3. An electric generation unit 8 includes a heat exchanger 80 arranged in the pipe 23 and an electric generator 81, and is configured to generate electric power through the use of exhaust heat. At a downstream side of the heat exchanger 80, a helium separator 9 is arranged so as to collect helium from the product gas after the reaction. A water cooling jacket 100 arranged so as to surround the Laval nozzle 3, is configured to perform cooling and neutron-shielding.

[NUCLEAR FUSION METHOD]

A method of how the nuclear fusion system (S) operates will be described with reference to FIGS. 1 and 2.

For a conventional technique of deceleration and capture of high energy muons, a method e.g. through the use of droplets of a high-concentration deuterium or tritium has been studied. For muons having an energy attenuated to approximately 5 MeV, there has been a result of the experiment that the attenuated muons penetrate through deuterium or tritium gas having a pressure as low as approximately 0.1 atm, and has been a report of the experiment that a range of such muons is approximately 0.2 to 0.3 m. A technical concept of the nuclear fusion system (S) is that supersonic flow of raw material gas is generated through the Laval nozzle 3, and a shock wave is generated by the shock wave generator 4 arranged on a path of the supersonic flow and thereby a Mach-shock wave surface is created on a center axis. Subsequently, incident muons decelerated through a lower pressure portion at an upstream side are transported to the created Mach-shock wave surface, as a nuclear fusion region, with a smaller amount of loss.

Initially, by the gas supply unit 2, deuterium gas or deuterium-tritium mixture gas as raw material gas is supplied continuously to the Laval nozzle 3. Hereinafter, descriptions will be provided for the case where the deuterium-tritium mixture gas is used as raw material gas.

In order to steadily operate the nuclear fusion system (S) through the use of the deuterium-tritium mixture gas, a component ratio of raw material gas needs to be adjusted such that gaseous tritium (t) is necessary in amount for gaseous deuterium (d), and more specifically, it is preferred that the component ratio be expressed as d : t = 1 : 1.

The deuterium-tritium mixture gas, which is supplied into the Laval nozzle 3, and allowed to pass through the flow regulation portion 30 at subsonic velocity, and then allowed to pass through the throat portion 31, is accelerated to supersonic velocity, e.g., Mach 3 to 5 when introduced into the reaction portion 32.

The accelerated deuterium-tritium mixture gas collides with the shock wave generator 4 arranged inside the reaction portion 32 of the Laval nozzle 3, and thereby an oblique shock wave is generated as shown in FIG. 2.

An oblique shock wave converges on a center axis of the Laval nozzle 3 so as to create a high-density shock wave surface called Mach shock wave.

Due to supersonic velocity in an upstream side of such a shock wave surface, the shock wave surface prevents any acoustic variation generated in a gas target and instability from being transmitted to an upstream side. A high-density gas target is continuously generated without being prevented even by, *e.g.,* any huge amplitudes of pressure variation caused by a nuclear fusion reaction or the like. Therefore, a resultant high-density standing wave having large amplitudes could be retained steadily and stably in an aerodynamically floating form in a gas phase. The high-density gas target (G) serves as a reaction region for negative-muon catalyzed fusion. In such a manner, it is possible to supply raw material gas to the reaction region for nuclear fusion at high velocity thereby to cause a nuclear fusion reaction to occur continuously.

More specifically, the high-density gas target could be retained in a state where, *e.g.,* a number density is $10^{21}$ cm$^{-3}$, a pressure is approximately 30 atm under the standard condition, a diameter is 2 cm, and an axis length distance is approximately 1 cm.

Through the muon production unit 1, the negative muons having an energy on the order of several MeV, *e.g.,* 3.5 MeV are introduced from an entrance of the flow regulation portion 30 of the Laval nozzle 3 into the high-density gas target (G). The introduced negative muons are decelerated in the flow regulation portion 30 having a lower density raw material gas flowing at subsonic velocity, and then an atom capturing a negative muon, a muonic atom, is created.

Inside the Laval nozzle 3, the negative muons fly on a path from an entry point toward the target in a system having a pressure gradient on the path. There is adopted a configuration having a run-up section, approximately 0.5 to 1 m from the entry point to near the target, set at a gas density of approximately 1 atm and set at a gas pressure and length of such levels that the gas density increases toward the gas target (G).

The generation of high temperature ions in the target is not initiated until a nuclear fusion reaction occurs so as to generate $\alpha$ particles. In order to initiate a nuclear fusion reaction, it is necessary to generate, before introducing the muons, ions having an energy of 1 to 2 KeV in a cold neutral gas for ignition.

An initial energy for starting a nuclear fusion reaction is inputted (ignited) through the fusion ignition unit 6, *i.e.,* a laser beam is introduced into the gas target, and as a result, deuterium ions having an energy, 1 keV, are produced. Upon introduction of the muons into the gas target (G) of the high density deuterium-tritium mixture gas, a tritium atom capturing a negative muon is created, and such a muonic atom and the deuterium ion in the gas target (G) so collide with each other as to undergo a nuclear fusion reaction, and as a result, a neutron having an energy, 14.1 MeV, and an $\alpha$ particle ($\alpha$ ray) having an energy, 3.5 MeV, are produced.

The kinetic energy of the $\alpha$ particle is transferred to an energy for the ionization of a part of the deuterium-tritium mixture gas and the creation of the deuterium ion having an energy, 1 KeV. A subsequent nuclear fusion reaction is undergone by the created deuterium ion and an atom capturing a negative muon.

The produced $\alpha$ particle so collides with the high-density gas target as to generate a recoil particle (ion) having an energy of 1 to 2 keV. The activated life of such a recoil particle is approximately 1 ns (nanosecond). The recoil particle and a next atom capturing a negative muon collide with each other, and thereby a chain of nuclear fusion reactions keeps steadily occurring.

Assuming that the velocity of supersonic flow is Mach 3, the distance of the flow for the life of the muon, 2.2 $\mu$s (microseconds), would be approximately 2 to 4 mm. This corresponds to newly supplying $10^{15}$ gaseous particles into a reaction region for nuclear fusion. Assuming that the number of repetition times of catalytic actions taken repetitively by a negative muon within its life, 2.2 $\mu$s, is 1000, the number of occurrence times of nuclear fusion occurring in one generation of negative muons would be obtained as the number of particles $10^{10}$ x the number of repetition times of catalytic actions 1000 = the number of occurrence times $10^{13}$, which would result in the necessary number of new fuel as $10^{13}$ gaseous particles. It is therefore possible to supply, with sufficient likelihood, raw material gas.

If a muonic molecule is formed in a fast process that a deuterium nucleus, which is in an energy state highly excited immediately after having captured a negative muon, emits a $\gamma$ ray (gamma ray) to make a transition to a ground state and encounter a tritium nucleus as recombination, the energy in an excited state is converted, at a certain level of probability, to a kinetic energy, 1 keV or higher, of a deuterium or tritium nucleus. By applying such a process, it is likely that, prior to a nuclear fusion reaction, high-velocity ions are immediately obtained from negative muons, and a hot start could be achieved through such ions.

Gas within a reaction region for nuclear fusion flows in the region at supersonic velocity and flows out the region at subsonic velocity. High-velocity flow of raw material gas has a function of: supplying newly raw material gas to the gas target (G) serving as the reaction region for nuclear fusion; and removing heat generated by a nuclear fusion reaction.

In the vicinity of an entrance of the region for nuclear fusion, fresh cooling gas is supplied in a supersonic flow having approximately Mach 3 to 5. By outflow gas of subsonic flow having approximately Mach 1 from an interior of the target toward a downstream side, a temperature of an edge of the target could be maintained at 200°C or lower. In such a manner, it is possible to prevent the gas target (G) from reaching a high temperature in a short period of time so as to be scattered by high energy of generated $\alpha$ ray, thereby capable of maintaining stable nuclear fusion.

[NUCLIDE TRANSMUTATION LIFE-REDUCTION TREATMENT SYSTEM & METHOD FOR LONG-LIVED FISSION PRODUCT]

The nuclear fusion system (S) may further include a unit for treatment of a long-lived fission product (LLFP) 7. In this case, the nuclear fusion system (S) is regarded as being a nuclide transmutation life-reduction treatment system for a long-lived fission product. An intense neutron ray having an energy, 14.1 MeV, generated in the high-density gas target enters an interior of the reaction portion 32 of the Laval nozzle 3. Such a neutron ray could be applied for treating the long-lived nuclear waste (including LLFP) discharged from a nuclear fission reactor or the like.

The long-lived fission product treatment unit 7 is configured such that an LLFP aggregate could be arranged, inside the reaction portion 32 of the Laval nozzle 3, in a position where an intensity of neutron is high, i.e., in a position where the LLFP surrounds the high-density gas target. In FIG. 1, the long-lived fission product treatment unit 7 is arranged in a pair of parts, upper and lower parts; however, there is no limitation to such a configuration, and the long-lived fission product treatment unit 7 may be arranged in a plurality of parts of the Laval nozzle 3, or may be integrally formed so as to surround an entire circumference of the reaction portion 32.

According to the LLFP aggregate arranged in such a manner, neutrons ejected from a neutron source over a wide region could be efficiently received by the LLFP aggregate.

The long-lived fission product treatment unit 7 includes: a shield member for shielding against a leak, outside a device, of a large number of high-velocity neutrons generated through the muon-catalyzed fusion by decelerating such high-velocity neutrons; and cooling means arranged so as to surround the shield member and circulate a liquid medium such as pure water for cooling the shield member as well as serving as a moderating material for the generated neutrons (not shown).

The number of neutrons generated in a DT nuclear fusion reaction (DT neutrons) is, e.g., $10^{19}$ particles/s. The neutrons are absorbed in the LLFP aggregate except for a part of them passing therethrough to a rear surface. The LLFP aggregate undergoing the nuclide transmutation has its half-life that could be reduced.

A relation between the thickness of an LLFP tile as the LLFP aggregate and a rate of the nuclide transmutation will be described.

Under the below-described conditions, the rate of the nuclide transmutation of the LLFP with nuclear fusion neutrons is calculated, and the dependence of an effective half-life of the LLFP upon the thickness of the LLFP tile is studied.

· Arrangement of LLFP: spherical shell model where a neutron source is located in the center and a radius is 25 cm
· Calculation method: Monte Carlo simulation method (PHITS) through the use of a time evolution type velocity equation
· Neutrons for irradiation: DT neutrons (14.1 MeV)
· Nuclide: Cs-135, Pd-107, Se-79, Zr-93
· Neutron intensity: three levels as $10^{17}$ n/s, $10^{18}$ n/s, $10^{19}$ n/s

The half-lives by natural decay are Cs-135: 2.3 million years, Pd-107: 6.5 million years, Se-79: 0.295 million years, and Zr-93: 1.53 million years.

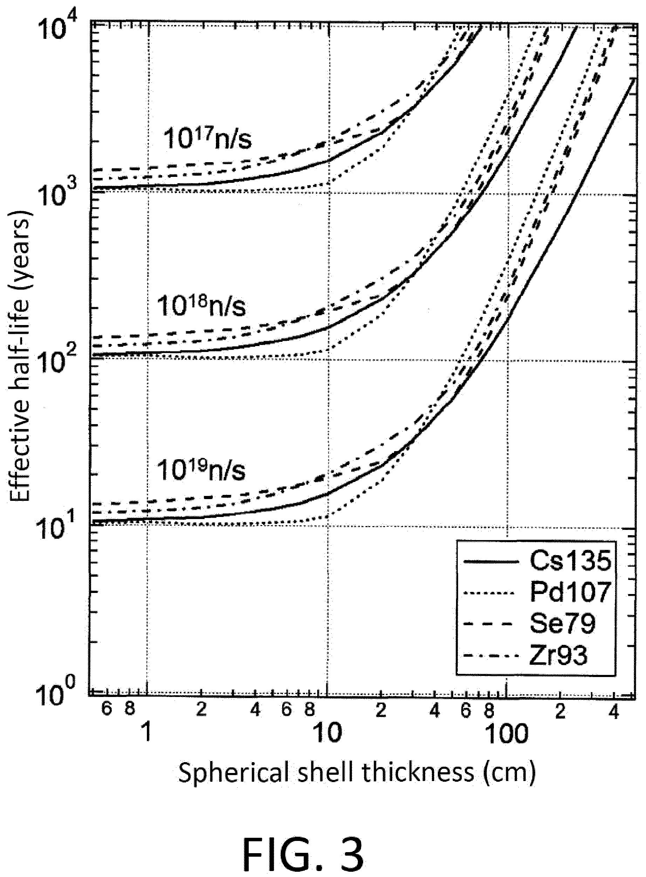

The results of the calculation are shown in FIG. 3. It is found that, in any of the neutron intensities, within a thickness region of the tile smaller than or equal to 10 cm, as the thickness decreases, the effective half-life could be steeply reduced. As the neutron intensity increases, the effective half-life is reduced. At the thickness of, *e.g.,* 10 cm, for each nuclide, when the neutron intensity is $10^{17}$ n/s, the effective half-life could be reduced to approximately 1000 years, when the neutron intensity is $10^{18}$ n/s, the effective half-life could be reduced to approximately 100 years, and when the neutron intensity is $10^{19}$ n/s, the effective half-life could be reduced to approximately 10 years.

In this way, it is found that, by suppressing the thickness of the LLFP tile to 10 cm at the maximum, it is possible to enhance the rate of the nuclide transmutation and to reduce the half-life. It is also found that, by enhancing the neutron intensity up to $10^{19}$ n/s, the effective half-life could be reduced to an extremely short period of time, several tens of years.

Excess neutrons and $\alpha$ particles (alpha particles) are so decelerated through the shield member as to be shielded against. Heat generated in the shield member is cooled by the cooling means, and exhaust heat is collected. By a combination of the shield member and the cooling means described above, neutrons are shielded against by the shield member so as not to leak any neutrons to an exterior, and a large amount of heat generated when neutrons are shielded against by the shield member is cooled by the cooling means and exhaust heat is collected, and thereby such an exhaust heat could be effectively utilized for generating electric power or the like.

For the above-described smaller-scaled neutron source having a higher density of neutron flux, a normal nuclear fusion reactor could not be applied. It is indicated that the nuclear fusion system (S) according to the present invention is suitable as a neutron source for the life-reduction treatment of the LLFP.

[EFFECTS OF EMBODIMENTS]

According to the nuclear fusion system (S) and the nuclear fusion method in the above embodiments, the high-density gas target could be retained, by the shock wave generated in a supersonic flow, in a gas phase as a nuclear fusion region, and the configuration of such a gas target could be cooled by a high-velocity flow. In such a manner, it is possible to relax engineering restrictions such as cooling imposed on a device, and to steadily and stably maintain the high-density gas target as the nuclear fusion region without the use of any large-scaled and complicated devices, thereby

EP 3 761 319 A1

capable of realizing the in-flight negative muon catalyzed nuclear fusion. The high-density gas target could also be applied for a high-density neutron source necessary for the nuclide transmutation life-reduction treatment for a long-lived fission product (LLFP).

According to the nuclide transmutation life-reduction treatment system (S) for a long-lived fission product (LLFP) and the nuclide transmutation life-reduction treatment method for a long-lived fission product (LLFP) in the above embodiments, by efficiently irradiating the LLFP with neutrons generated through the use of the nuclear fusion system and the nuclear fusion method, respectively, the LLFP could undergo the nuclide transmutation, and thereby its half-life could be reduced.

[OTHER EMBODIMENTS]

In a nuclear fusion system (S) and a nuclear fusion method, a DD fusion reaction through the use of gaseous deuterium as raw material gas could also be operated.

(Reference Numerals)

| 1 | Muon production unit |
| 2 | Gas supply unit |
| 3 | Laval nozzle |
| 4 | Shock wave generator |
| 5 | Diffusion tube |
| 6 | Fusion ignition unit |
| 7 | Long-lived fission product treatment unit |
| 8 | Electric generation unit |
| 9 | Helium separator |
| 10 | Proton accelerator |
| 11 | Muon generation part |
| 12 | Muon introduction part |
| 13 | Muon deflection magnet |
| 20 | Compressor |
| 21 | Accumulator tank |
| 22 | Dump tank |
| 23 | Pipe |
| 30 | Flow regulation portion |
| 31 | Throat portion |
| 32 | Reaction portion |
| 80 | Heat exchanger |
| 81 | Electric generator |
| 100 | Water cooling jacket |
| G | Gas target |
| S | Nuclear fusion system |

**Claims**

1. A nuclear fusion system comprising:

   a muon generation unit configured to generate negative muons;
   a gas supply unit configured to circulate and supply gaseous deuterium or gaseous deuterium-tritium mixture as raw material gas for a nuclear fusion reaction; and
   a Laval nozzle configured to accelerate the raw material gas supplied from the gas supply unit to such an extent that the raw material gas travels at supersonic velocity,
   wherein the Laval nozzle includes

      a flow regulation portion connected to the gas supply unit, the flow regulation portion configured such that the generated negative muons are decelerated therein, and

a reaction portion arranged at a downstream side of the flow regulation portion, the reaction portion configured such that the nuclear fusion reaction occurs therein, the reaction portion having arranged thereinside a shock wave generator configured to undergo collision with the raw material gas accelerated to supersonic velocity so as to generate an oblique shock wave,

wherein the raw material gas supplied from the gas supply unit into the Laval nozzle is accelerated by the Laval nozzle to supersonic velocity so as to collide with the shock wave generator,
wherein the oblique shock wave is generated as a result of collision with the shock wave generator, and is caused to converge on a center axis of the Laval nozzle, and thereby a high-density gas target is retained in a gas phase, and
wherein the negative muons generated from the muon generation unit are introduced into the retained high-density gas target, and thereby the nuclear fusion reaction is caused to occur.

2. The nuclear fusion system, according to claim 1, further comprising:
a fusion ignition unit configured to input an initial energy for starting the nuclear fusion reaction into the high-density gas target.

3. A nuclide transmutation life-reduction treatment system for a long-lived fission product, through the use of the nuclear fusion system according to claim 1 or 2, the nuclide transmutation life-reduction treatment system comprising:

a long-lived fission product treatment unit configured such that the long-lived fission product is arranged so as to surround the high-density gas target,
wherein neutrons generated as a result of occurrence of the nuclear fusion reaction in the high-density gas target are introduced into the long-lived fission product, so that the long-lived fission product undergoes nuclide transmutation, thereby to have a half-life reduced.

4. A nuclear fusion method comprising the steps of:

providing a Laval nozzle and a shock wave generator arranged inside the Laval nozzle for generating an oblique shock wave;
accelerating gaseous deuterium or gaseous deuterium-tritium mixture, as raw material gas for a nuclear fusion reaction, to such an extent that the raw material gas travels at supersonic velocity;
generating the oblique shock wave as a result of collision of the accelerated raw material gas and the shock wave generator, and causing the generated oblique shock wave to converge on a center axis of the Laval nozzle, thereby to retain a high-density gas target in a gas phase; and
introducing negative muons into the high-density gas target, thereby to generate the nuclear fusion reaction.

5. A nuclide transmutation life-reduction treatment method for a long-lived fission product comprising the steps of:
introducing neutrons generated by the nuclear fusion method according to claim 4 into a long-lived fission product arranged so as to surround a reaction region for nuclear fusion, so that the long-lived fission product undergoes nuclide transmutation, thereby to have a half-life reduced.

**FIG. 1**

FIG. 2

FIG. 3

FIG. 4

EP 3 761 319 A1

# INTERNATIONAL SEARCH REPORT

| | International application No. |
|---|---|
| | PCT/JP2019/007564 |

**A. CLASSIFICATION OF SUBJECT MATTER**
Int. Cl. G21B3/00(2006.01)i, G21F9/00(2006.01)i

According to International Patent Classification (IPC) or to both national classification and IPC

**B. FIELDS SEARCHED**

Minimum documentation searched (classification system followed by classification symbols)
Int. Cl. G21B3/00, G21F9/00

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)
Science Direct, JSTPlus (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2017-198622 A (KYOTO UNIVERSITY) 02 November 2017, paragraphs [0013], [0035]-[0043], fig. 1-3 & WO 2017/187730 A1, paragraphs [0013], [0035]-[0043], fig. 1-3 | 1-5 |
| A | JP 2016-114370 A (NIHON UNIVERSITY) 23 June 2016, paragraphs [0002], [0003], [0018]-[0023], fig. 2 & WO 2016/093324 A1, paragraphs [0002], [0003], [0018]-[0023], fig. 2 | 1-5 |
| A | JP 7-239397 A (POWER REACTOR AND NUCLEAR FUEL DEVELOPMENT CORPORATION) 12 September 1995, paragraphs [0006]-[0008], [0010], [0011], [0018]-[0020], fig. 1, 2 (Family: none) | 1-5 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08.04.2019 | 23.04.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

15

## INTERNATIONAL SEARCH REPORT

| | International application No. |
|---|---|
| | PCT/JP2019/007564 |

C (Continuation).  DOCUMENTS CONSIDERED TO BE RELEVANT

| Category* | Citation of document, with indication, where appropriate, of the relevant passages | Relevant to claim No. |
|---|---|---|
| A | PETITJEAN, C., MUON CATALYZED FUSION, Fusion Engineering and Design, July 1989, vol. 11, issue 1, 2, pp. 255-264, in particular, pp. 262-264, section 4 | 1-5 |
| P, X | 佐藤元泰 et al., 定常超音速衝撃波中の高密度ガスにおけるインフライト・ミュオン触媒核融合の概念—インフライト・ミュオン触媒核融合ラムジットエンジンの概念, 中部大学工学部紀要, March 2018, vol. 53, pp. 6-14, in particular, sections 4-5 (SATO, Motoyasu et al. A Concept of In-Flight Muon Catalysis Fusion (IFMCF) in High Density Gas in Steady State Supersonic Shockwave – Concept of Supersonic In "Flight Muon Catalysis Fusion Ramjet –. Memoirs of College of Engineering, Chubu University.) | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016114370 A

- JP H07239397 B

**Non-patent literature cited in the description**

- **SHOICHI YOSHIKAWA ; ATSUO LIYOSHI.** Introduction to Nuclear Fusion - High Temperature Plasma Confinement. Kyoritsu Shuppan Co., Ltd, 1972